# EUROPÄISCHE PATENTSCHRIFT

(11) **EP 3 287 762 B1**
(45) Veröffentlichungstag und Bekanntmachung des Hinweises auf die Patenterteilung: **17.07.2019**
(21) Anmeldenummer: 17001401.3
(22) Anmeldetag: 17.08.2017
(51) Int. Cl.: G01N 1/22, G01N 1/24, G01N 33/50

(54) **AEROSOLEXPOSITIONSVORRICHTUNG UND -VERFAHREN**
AEROSOL EXPOSURE DEVICE AND METHOD
DISPOSITIF D'EXPOSITION AUX AÉROSOLS ET PROCÉDÉ D'EXPOSITION AUX AÉROSOLS

(30) Priorität: 23.08.2016 DE 102016010194
(43) Veröffentlichungstag der Anmeldung: 28.02.2018
(73) Patentinhaber: VITROCELL Systems GmbH, 79183 Waldkirch (DE)
(72) Erfinder: Krebs, Tobias, 79261 Gutach (DE); Hittinger, Marius, 66440 Blieskastel (DE); Lehr, Claus-Michael, 66125 Saarbrücken (DE)
(74) Vertreter: von Pichler, Cletus

(56) Entgegenhaltungen:
- WO-A2-2013/063426
- DE-A1-102009 016 364

## Beschreibung

Die vorliegende Erfindung betrifft Vorrichtungen und Verfahren zur Durchführung von Untersuchungen biologischer Proben, die Proben einem Aerosol ausgesetzt werden.

### HINTERGRUND DER ERFINDUNG

Im Rahmen der Abschätzung von Gesundheitsrisiken wird die biologische Wirkung und Aktivität von luftgetragenen Substanzen, Gasen, Mischungen etc. (im Folgenden als Aerosole bezeichnet) auf biologische Zellen, beispielsweise im menschlichen oder tierischen respiratorischen System, untersucht. Dies kann erfolgen, indem eine zu untersuchende biologische Probe beispielsweise auf einer Membran angeordnet einem Aerosol ausgesetzt wird. Vorrichtungen und Verfahren hierzu sind beispielsweise aus der DE 10 2009 016 364 A1, WO 2013/063426 A2, DE 100 34 281 A1 und DE 10 2014 118 846 A1 bekannt.

Die DE 10 2009 016 364 A1 offenbart eine Aerosolexpositionsvorrichtung, um wenigstens eine Probe mit einem Aerosol zu beaufschlagen, mit einer Basisvorrichtung und einer Expositionsplatte, die eine Expositionskammer mit einer Expositionskammer-Öffnung umfasst.

Die WO 2013/063426 A2 offenbart eine Aerosolexpositionsvorrichtung, bei der es keinen bewegbaren Schlitten und auch keine Sedimentationsvorrichtung gibt.

### AUFGABE

Der vorliegenden Erfindung liegt die Aufgabe zugrunde, Lösungen bereitzustellen, welche Untersuchungen, bei denen eine Probe einem Aerosol ausgesetzt wird, vereinfachen und verbessern.

### KURZBESCHREIBUNG DER ERFINDUNG

Diese Aufgabe wird durch Vorrichtungen und Verfahren gemäß den unabhängigen Ansprüchen gelöst. Die abhängigen Ansprüche beschreiben bevorzugte Ausführungsformen.

Insbesondere ist eine Aerosolexpositionsvorrichtung vorgesehen, um wenigstens eine Probe mit einem Aerosol zu beaufschlagen. Die Aerosolexpositionsvorrichtung umfasst
- eine Basisvorrichtung, die eine Führungsvorrichtung mit einem bewegbaren Schlitten umfasst,
- eine Sedimentationsvorrichtung, die an der Basisvorrichtung angebracht ist und einen Sedimentationskanal mit einem Sedimentationskanal-Aerosoleinlass und einem Sedimentationskanal-Aerosolauslass umfasst,
- eine Expositionsplatte, die eine Expositionskammer mit einer Expositionskammer-Öffnung und einen Druckkanal mit einer ersten Druckkanal-Öffnung umfasst,
   wobei
- die Expositionsplatte an dem bewegbaren Schlitten angebracht ist und mit diesem bewegbar ist.

Der Schlitten weist eine Proben-Beladeposition auf, in der die Expositionskammer-Öffnung zugänglich ist, um eine Probe in die Expositionskammer einbringen zu können.

Der Schlitten weist ferner eine Aerosol-Beschickungsposition auf, in der die erste Druckkanal-Öffnung und der Sedimentationskanal-Aerosolauslass in Fluidverbindung stehen, um in dem Druckkanal vorherrschenden Druck an den Sedimentationskanal anzulegen.

Der Schlitten hat auch eine Aerosol-Expositionsposition, in der die Expositionskammer-Öffnung und der Sedimentationskanal-Aerosolauslass in Fluidverbindung stehen, um in dem Sedimentationskanal vorhandenes Aerosol in die Expositionskammer einzubringen.

Zum Einbringen einer Probe in eine Expositionskammer kann ein Probeneinsatz verwendet werden; alternativ kann eine Probe auch direkt in eine Expositionskammer eingebracht werden.

Die Sedimentationsvorrichtung kann zwei oder mehr Sedimentationskanäle jeweils mit einem Sedimentationskanal-Aerosoleinlass und einem Sedimentationskanal-Aerosolauslass umfassen.

Die Expositionsplatte kann für jeden der Sedimentationskanäle jeweils eine Expositionskammer mit einer Expositionskammer-Öffnung und einen Druckkanal mit einer ersten Druckkanal-Öffnung umfassen. Dabei können in der Proben-Beladeposition, die Expositionskammer-Öffnungen zugänglich sein.

In der Aerosol-Beschickungsposition können die ersten Druckkanal-Öffnungen und die entsprechenden Sedimentationskanal-Aerosolauslässe jeweils in Fluidverbindung stehen, während in der Aerosol-Expositionsposition die Expositionskammer-Öffnungen und die entsprechenden Aerosol Sedimentationskanal-Aerosolauslässe jeweils in Fluidverbindung stehen können.

Die Sedimentationsvorrichtung kann einen Aerosol-Einlass zum Anschluss an eine Aerosolquelle aufweisen, der in Fluidverbindung mit dem wenigstens einen Sedimentationskanal-Aerosoleinlass steht.

Die Sedimentationsvorrichtung kann eine Aerosol-Verteilungskammer aufweisen, die in Fluidverbindung mit dem Aerosol-Einlass und dem wenigstens einen Sedimentationskanal-Aerosoleinlass steht und zwischen diesen angeordnet ist.

Die Sedimentationsvorrichtung kann eine Aerosol-Verteilungskammer aufweisen, die in Fluidverbindung mit dem Aerosol-Einlass und dem wenigstens einen Sedimentationskanal-Aerosolanschluss steht und zwischen diesen angeordnet ist.

Die Sedimentationsvorrichtung kann eine Grundplatte aufweisen, die an einer der Expositionsplatte gegenüber liegenden Seite, welche eine Unterseite der Grundplatte sein kann, eine reibungsminimierende Oberfläche aufweist.

Über die Länge eines Sedimentationskanals kann die jeweilige sogenannte Sedimentationszeit beeinflusst werden, welches die Zeit ist, welche ein eingebrachtes Aerosol benötigt, um vom jeweiligen Sedimentationskanal-Aerosoleinlass zum jeweiligen Sedimentationskanal-Aerosolauslass zu gelangen (z.B. abzusinken). Die Sedimentationskanäle können alle gleich lang sein. Bei solchen Ausführungsformen kann für jeden Sedimentationskanal die gleiche sogenannte Sedimentationszeit erreicht.

Um für Sedimentationskanäle unterschiedliche Sedimentationszeiten zu erreichen, können wenigstens zwei Sedimentationskanäle unterschiedliche Längen aufweisen.

In der wenigstens einen Expositionskammer der Expositionsplatte kann jeweils eine Waage angeordnet sein.

Der wenigstens eine Druckkanal der Expositionsplatte kann jeweils eine zweite Druckkanal-Öffnung aufweisen, der in Fluidverbindung mit einem Druckeinlass der Expositionsplatte steht.

Es ist vorgesehen, dass der Druckeinlass der Expositionsplatte wenigstens in der Aerosol-Beschickungsposition des Schlittens der Führungsvorrichtung in Fluidverbindung mit einem Druckauslass der Basisvorrichtung stehen kann.

Die Basisvorrichtung kann eine Schlitten-Positioniervorrichtung aufweisen, welche
- in der Proben-Beladeposition des Schlittens der Führungsvorrichtung eine erste Position,
- in der Aerosol-Beschickungsposition des Schlittens der Führungsvorrichtung eine zweite Position, und
- in der Aerosol-Expositionsposition des Schlittens der Führungsvorrichtung eine dritte Position haben kann.

Die die erste Position und die zweite Position der Schlitten-Positioniervorrichtung können gleich sein, oder unterschiedliche Positionen sein.

Die Schlitten-Positioniervorrichtung kann in seiner zweiten Position und in seiner dritten Position mit dem Schlitten der Führungsvorrichtung gekoppelt sein.

Die erste Position der Schlitten-Positioniervorrichtung kann auch als erste Endposition bezüglich der Grundplatte der Basisvorrichtung bezeichnet werden.

Die dritte Position der Schlitten-Positioniervorrichtung kann auch als zweite Endposition bezüglich der Grundplatte der Basisvorrichtung bezeichnet werden.

Die Basisvorrichtung kann eine Arretierung aufweisen, die den Schlitten der Führungsvorrichtung und die Schlitten-Positioniervorrichtung miteinander koppelt, wenn der Schlitten der Führungsvorrichtung von der Proben-Beladeposition in die Aerosol-Beschickungsposition übergeht.

Die Arretierung kann (alternativ und ergänzend) den Schlitten der Führungsvorrichtung und die Schlitten-Positioniervorrichtung entkoppeln, wenn der Schlitten der Führungsvorrichtung von der Aerosol-Beschickungsposition in die Proben-Beladeposition übergeht.

Die Schlitten-Positioniervorrichtung kann eine Schlitten-Bewegungsvorrichtung aufweisen, welche ausgelegt ist, den Schlitten in eine erste Schlittenposition und in eine zweite Schlittenposition zu bringen.

Die Basisvorrichtung kann eine Schlitten-Positionsdetektionsvorrichtung aufweisen, die Positionen des Schlittens der Führungsvorrichtung zu detektieren vermag.

Die Basisvorrichtung kann einen Druckeinlass zum Anschluss an eine Druckquelle aufweisen.

Die Aerosolexpositionsvorrichtung kann eine Druckquelle umfassen, die mit dem Druckeinlass der Basisvorrichtung in Fluidverbindung steht und Unterdruck und/oder Überdruck zu erzeugen vermag.

Die Aerosolexpositionsvorrichtung kann eine Aerosolquelle umfassen, die gegebenenfalls in Fluidverbindung mit dem Aerosol-Einlass der Sedimentationsvorrichtung stehen kann.

Die Aerosolexpositionsvorrichtung kann eine Steuerung umfassen. Die Steuerung kann, wenn vorhanden, mit der Schlitten-Positioniervorrichtung betriebsfähig verbunden sein, und/oder, falls vorhanden, mit der Schlitten-Positionsdetektionsvorrichtung betriebsfähig verbunden sein, und/oder, falls vorhanden, mit der Druckquelle verbunden sein, und/oder, falls vorhanden, mit der Aerosolquelle verbunden sein.

Ferner ist ein Aerosolexpositionsverfahren vorgesehen, um wenigstens eine Probe mit einem Aerosol zu beaufschlagen. Das Aerosolexpositionsverfahren kann folgende Schritte umfassen:
- Positionieren eines Schlittens einer Aerosolexpositionsvorrichtung in einer Proben-Beladeposition und Einbringen jeweils einer Probe in eine Expositionskammer des Schlittens,
- Positionieren des Schlittens in einer Aerosol-Beschickungsposition und Anlegen eines in wenigstens einem Druckkanal des Schlittens vorherrschenden Druckes an einen dem Drucckanal zugeordneten Sedimentationskanal, um in diesen Aerosol einzubringen,
- Positionieren des Schlittens in einer Aerosol-Expositionsposition, um im dem wenigstens einen Sedimentationskanal vorhandenes Aerosol in die jeweilige Expositionskammer einzubringen.

Vorzugsweise wird das erfindungsgemäße Aerosolexpositionsverfahren unter Verwendung einer erfindungsgemäßen Aerosolexpositionsvorrichtung durchgeführt.

Bei dem Aerosolexpositionsverfahren kann nach dem Einbringen von Aerosol in die wenigstens eine Expositionskammer der Schlitten wieder in die Proben-Beladeposition gebracht werden, um die wenigstens eine Probe aus der jeweiligen Expositionskammer zu entnehmen.

Bei dem Aerosolexpositionsverfahren kann der Schritt, den Schlitten in der Proben-Beladeposition zu positionieren, und/oder kann der Schritt, den Schlitten wieder Proben-Beladeposition zu bringen, von einem Benutzer manuell durchgeführt werden.

Bei dem Aerosolexpositionsverfahren kann der Schritt, den Schlitten in der Aerosol-Beschickungsposition zu positionieren, und/oder kann der Schritt, den Schlitten in der Aerosol-Expositionsposition zu positionieren, gesteuert und/oder automatisiert durchgeführt werden.

### KURZBESCHREIBUNG DER ZEICHNUNGEN

Im Folgenden werden Ausführungsformen der vorliegenden Erfindung anhand der Zeichnungen beschrieben.
- Fig. 1: zeigt Gesamtansichten einer Ausführungsform einer erfindungsgemäßen Aerosolexpositionsvorrichtung;
- Fig. 2a, 2b und 2c: zeigen Ansichten der Sedimentationsvorrichtung der Aerosolexpositionsvorrichtung von Fig. 1;
- Fig. 3a, 3b und 3c: zeigen Ansichten der Expositionsplatte der Aerosolexpositionsvorrichtung von Fig. 1;
- Fig. 4a und 4b: zeigen Schnittansichten der Expositionsplatte von Fig. 3 entlang der Schnittlinien A-A bzw. B-B in Fig. 4c;
- Fig. 5a: zeigt eine Ansicht der Basisvorrichtung der Aerosolexpositionsvorrichtung von Fig. 1 in einer Proben-Beladeposition;
- Fig. 5b: zeigt eine Ansicht der Basisvorrichtung der Aerosolexpositionsvorrichtung von Fig. 1 in einer Aerosol-Beschickungsposition;
- Fig. 5c: zeigt eine Ansicht der Basisvorrichtung der Aerosolexpositionsvorrichtung von Fig. 1 in einer Aerosol-Expositionsposition;
- Fig. 6a und 6b: zeigen Ansichten der Aerosolexpositionsvorrichtung von Fig. 1 in einer Probenbeladungsphase;
- Fig. 7a, 7b und 7c: zeigen Ansichten der Aerosolexpositionsvorrichtung von Fig. 1 in einer Aerosolbeschickungsphase;
- Fig. 8a, 8b und 8c: zeigen Ansichten der Aerosolexpositionsvorrichtung von Fig. 1 in zu Beginn einer Aerosolexpositionsphase (Fig. 8a), in der Aerosolexpositionsphase (Fig. 8b) und beim Abschluss der Aerosolexpositionsphase (Fig. 8c);
- Fig. 9a, 9b und 9c: zeigen Ansichten der Aerosolexpositionsvorrichtung von Fig. 1 in zu Beginn einer Probenentnahmephase (Fig. 9a) und in der Probenentnahmephase (Fig. 9b und 9c).

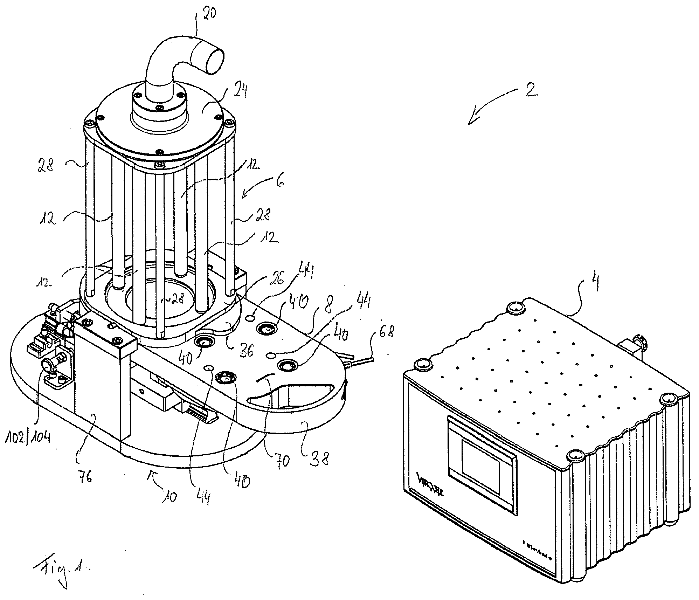

Auf Zeichnungen, die mehrere mit einer Zeichnungsnummer und Kleinbuchstaben bezeichnete Darstellungen umfassen (z.B. Fig. 1), kann zusammenfassend mit der jeweiligen Zeichnungsnummer verwiesen werden.

In den Zeichnungen haben wenigstens im Wesentlichen funktionsgleiche Elemente gleiche Bezugszeichen. Ferner gelten für verschiedene Ausführungsformen gemachten Ausführungen auch für alle anderen Ausführungsformen, sofern nichts anderes gesagt wird. Ferner wird im Folgenden auf alle Zeichnungen insgesamt Bezug genommen, sofern nicht anders angegeben oder auf bestimmte Zeichnungen verwiesen wird.

### BESCHREIBUNG BEVORZUGTER AUSFÜHRUNGSFORMEN

Die Zeichnungen zeigen eine insgesamt mit 2 bezeichnete Aerosolexpositionsvorrichtung 2, die, wie in Fig. 1 veranschaulicht, eine Steuerung 4 umfasst. Die Steuerung 4 dient zur Steuerung 4 weiterer Komponenten der Aerosolexpositionsvorrichtung 2 und ist hierfür mit diesen betriebsfähig verbunden. Die Verbindung der Steuerung 4 mit zu steuernden Komponenten der Aerosolexpositionsvorrichtung 2 kann drahtgebunden und/oder drahtlos sein, beispielsweise über ein lokales Netzwerk (WLAN), Bluetooth und andere Funkübertragungsvorrichtungen.

Die Aerosolexpositionsvorrichtung 2 umfasst ferner eine Sedimentationsvorrichtung 6, eine Expositionsplatte 8 und eine Basisvorrichtung 10.

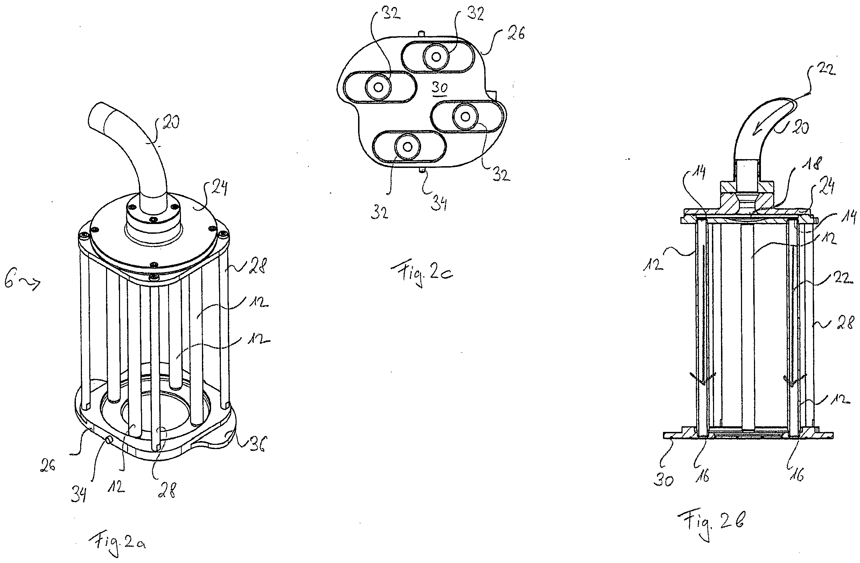

Die Sedimentationsvorrichtung 6 (siehe insbesondere Fig. 2a, 2b und 2c) weist wenigstens einen Sedimentationskanal 12 auf, wobei beispielsweise wie gezeigt 4 Sedimentationskanäle 12, aber auch 2, 3, 6, ..., 12, ... 24, ... oder auch 48 Sedimentationskanäle 12 vorgesehen sein können.

Die Sedimentationskanäle 12 weisen jeweils eine Innenseite auf, die beispielsweise abhängig von zu verwendenden Aerosolen beschichtet sein kann, um z.B. Wechselwirkungen zwischen Material der Sedimentationskanäle 12 und Aerosol zu unterbinden, Beschädigung der Innenseiten der Sedimentationskanäle 12 zu verhindern/minimieren. Die Länge der Sedimentationskanäle 12 ist mitbestimmend für die Zeiten (auch als Sedimentationszeit bezeichnet), die eingebrachtes Aerosol in dem jeweiligen Sedimentationskanal nach unten gelangt bzw. sinken kann. Diese sogenannten Sedimentationszeiten können (auch) über die Länge der Sedimentationskanäle 12 beeinflusst werden.

Bei den gezeigten Ausführungsformen sind die Sedimentationskanäle 12 im Wesentlichen gleich lang, so dass für jeden Sedimentationskanal 12 im Wesentlichen die gleiche Sedimentationszeit erreicht wird.

Bei weiteren vorgesehenen Ausführungsformen können, um unterschiedliche Sedimentationszeiten zu erreichen, ein, mehrere oder alle Sedimentationskanäle 12 unterschiedliche Längen aufweisen.

Sedimentationszeiten können auch, wie weiter unter näher erläutert, über in den Sedimentationskanälen 12 herrschenden Druck (insbesondere Unterdruck) und/oder die Dauer der Aerosol-Exposition von zu untersuchenden Proben (s. weiter unten, Dauer der Aerosol-Expositionsposition des Schlittens).

Die Sedimentationskanäle 12 weisen jeweils einen Sedimentationskanal-Aerosoleinlass 14 und einen Sedimentationskanal-Aerosolauslass 16 auf. Die Sedimentationskanal-Aerosoleinlässe 14 dienen dazu, Aerosol aus einer Aerosolquelle dem jeweiligen Sedimentationskanal zuzuführen. Hierfür können die Sedimentationskanal-Aerosoleinlässe 14 einzeln, paarweise oder gruppenweise mit einer Aerosolquelle in Fluidverbindung gebracht werden, um z.B. verschiedene Aerosole unterschiedlichen Sedimentationskanälen 12 zuzuführen.

Gemäß den gezeigten Ausführungsformen sind alle Sedimentationskanäle 12 mit einer Aerosol-Verteilungskammer 18 verbunden, die wiederum mit einem Aerosol-Einlass 20 verbunden ist. Der Aerosol-Einlass 20 dient dazu, die Sedimentationsvorrichtung 6 mit einer Aerosolquelle zu verbinden, um von dieser ein Aerosol zu erhalten. Über den Aerosol-Einlass 20 zugeführtes Aerosol gelangt in die Aerosol-Verteilungskammer 18, von wo es dann im Wesentlichen gleichmäßig verteilt den Sedimentationskanal-Aerosoleinlässen 14 und von dort den Sedimentationskanälen 12 zugeführt werden kann. Dies ist in Fig. 2b durch die Pfeile, welche die Aerosolzufuhrrichtungen abgeben.

Der Aerosol-Einlass 20 kann bezüglich der Strömungsrichtung von Aerosol durch den Aerosol-Einlass 20 hindurch einen im Wesentlichen gleichmäßigen Querschnitt haben. Dabei kann die Auslassöffnung des Aerosol-Einlasses 20 in die Aerosol-Verteilungskammer 18 den gleichen Querschnitt wie der Rest des Aerosol-Einlasses 20 haben.

Bei weiteren Ausführungsformen ist es vorgesehen, dass die Auslassöffnung des Aerosol-Einlasses 20 einen größeren oder geringeren Querschnitt wie der Rest des Aerosol-Einlasses 20 hat. Dies kann z.B. dadurch erreicht werden, indem sich der Aerosol-Einlass 20 an seiner Auslassöffnung verbreitert bzw. verjüngt.

Eine Auslassöffnung des Aerosol-Einlasses 20 geringeren Querschnitts kann z.B. auch dadurch erreicht werden, indem an der Auslassöffnung beispielsweise eine oder mehrere Lochscheiben oder Lochblenden jeweils mit einem Loch angeordnet werden, dessen Querschnitt dem für die Auslassöffnung gewünschten Querschnitt entspricht.

Abhängig von dem zugeführten Aerosol kann die Aerosol-Verteilungskammer 18 auch dazu dienen, Aerosol-Bestandteile bestimmter Größe und/oder Gewicht abzuscheiden, so dass diese in der Aerosol-Verteilungskammer 18 verbleiben, werden das restliche Aerosol in die Sedimentationskanäle 12 gelangen kann.

Über die den Sedimentationskanal-Aerosoleinlässen 14 gegenüberliegenden Sedimentationskanal-Aerosolauslässe 16 kann Aerosol aus der Sedimentationsvorrichtung 6 abgegeben werden.

Wie in Fig. 2 beispielhaft veranschaulicht, kann die Sedimentationsvorrichtung 6 eine Deckplatte 24, in der die Aerosol-Verteilungskammer 18 angeordnet ist, und eine Grundplatte 26 aufweisen, zwischen denen sich die Sedimentationskanäle 12 erstrecken. Die Deckplatte 24 und die Grundplatte 26 können mittels Stützen 28 miteinander verbunden und von diesen abgestützt sein. Die Deckplatte 24 weist Durchlässe auf, durch die sich die jeweiligen Enden mit Sedimentationskanal-Aerosoleinlässen 14 der Sedimentationskanäle 12 zur Aerosol-Verteilungskammer 18 erstrecken können. Die Grundplatte 26 weist auch Durchlässe auf, durch die sich die jeweiligen Enden mit Sedimentationskanal-Aerosolauslässen 16 der Sedimentationskanäle 12 hindurcherstrecken können, beispielsweise so, dass die Sedimentationskanal-Aerosolauslässe 16 im Wesentlichen bündig mit der darstellungsgemäßen Unterseite 32 der Grundplatte 26 sind oder noch innerhalb des jeweiligen Grundplattendurchlasses enden.

Die Unterseite 32 der Grundplatte 26 kann wenigstens teilweise reibungsoptimiert sein, wofür die Unterseite 32 der Grundplatte 26 beispielsweise wenigstens teilweise oberflächenbearbeitet (z.B. durch Polieren) sein und/oder wenigstens teilweise eine Gleitbeschichtung aufweisen (s. Fig. 2c) kann.

An den Sedimentationskanal-Aerosolauslässen 16 oder benachbart dazu kann jeweils eine Dichtung 32 (z.B. O-Ring) vorgesehen sein, um die Sedimentationskanal-Aerosolauslässe 16 gegenüber dem jeweiligen Grundplattendurchlass abzudichten und/oder, wie weiter unten erläutert, für eine Abdichtung gegenüber der Expositionsplatte 8 zu sorgen (s. Fig. 2c).

An der Grundplatte 26 können beispielsweise seitlich Stifte 34 für eine Verbindung mit der Basisvorrichtung 10 angeordnet sein. Die Grundplatte 26 kann eine Ausformung 36 haben, die beispielsweise in Verbindung mit einer Positionsmarke 70 an der Expositionsplatte 8 bei der Positionierung der Sedimentationsvorrichtung 6 und der Expositionsplatte 8 relativ zueinander helfen kann.

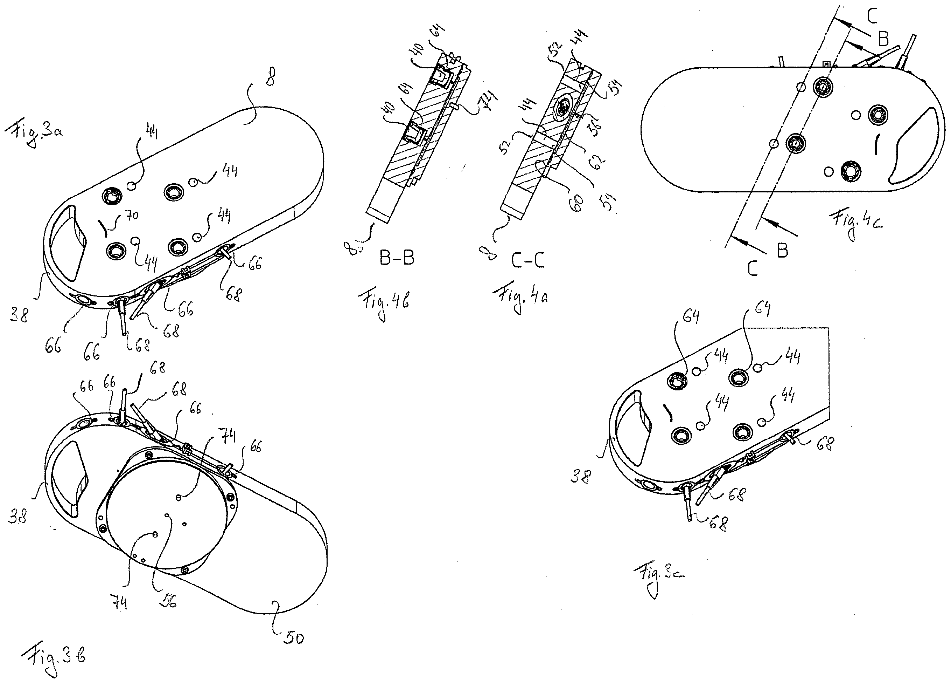

Die Expositionsplatte 8 (siehe insbesondere Fig. 3 und 4) kann einen Griff 38 aufweisen, mit dem die Expositionsplatte 8 gehandhabt, positioniert und insbesondere relativ zu der Basisvorrichtung 10 und der Sedimentationsvorrichtung 6 bewegt werden kann.

Die Expositionsplatte 8 umfasst wenigstens eine Expositionskammer (s.a. Fig. 4a), wobei beispielsweise wie gezeigt 4 Expositionskammern 40, aber auch 2, 3, 6, ..., 12, ... 24, ... oder auch 48 Expositionskammern 40 vorgesehen sein können.

Vorzugsweise entspricht die Anzahl der Sedimentationskanäle 12 der Anzahl der Expositionskammern 40 und umgekehrt. Es ist aber auch möglich, dass es mehr Sedimentationskanäle 12 als Expositionskammern 40 oder umgekehrt gibt.

Die Expositionskammern 40 sind jeweils abgesehen von einer Expositionskammeröffnung 42 abgeschlossen, insbesondere so, dass eingebrachte Stoffe (z.B. Aerosol, zu untersuchende Probe) nicht einweichen kann. Zu untersuchende Proben können direkt (d.h. ohne Träger o.ä.) in die Expositionskammern 40 eingebracht werden. Vorzugsweise wird jedoch jeweils ein Probeeinsatz auch Insert genannt, verwendet (z.B. als Transwell® bezeichnete Einsätze).

Ferner weist die Expositionsplatte 8 vorzugsweise jeweils benachbart zu einer Expositionskammer Druckkanäle 44 auf, die sich von einer Oberseite der Expositionsplatte 8 durch diese hindurch bis zu einer Druck-Verteilungskammer 48 erstrecken (s. Fig. 4b). An der Oberseite der Expositionsplatte 8 weisen die Druckkanäle 44 jeweils eine erste Druckkanal-Öffnung auf, der jeweils eine zweite Druckkanal-Öffnung an der Unterseite 50 der Expositionsplatte 8 gegenüberliegt.

Die ersten Druckkanal-Öffnungen 52 dienen dazu, Druck im jeweiligen Druckkanal vorherrschenden Druck abzugeben/anzulegen. Dies kann beispielsweise verglichen mit an der entsprechenden Druckkanal-Öffnung vorliegender Umgebungsdruck Unterdruck, aber auch Überdruck sein.

Über die zweiten Druckkanal-Öffnungen 54 kann den Druckkanälen 44 Druck einer Druckquelle zugeführt werden. Hierfür können die zweiten Druckkanal-Öffnungen 54 einzeln, paarweise oder gruppenweise mit einer Druckquelle in Fluidverbindung gebracht werden, um z.B. verschiedene Drücke unterschiedlichen Sedimentationskanälen 12 zuzuführen. Gemäß den gezeigten Ausführungsformen sind alle zweiten Druckkanal-Öffnungen 54 mit einer Druck-Verteilungskammer 48 verbunden, die wiederum mit einem Druckeinlass 56 der Expositionsplatte 8 verbunden ist. Der Druckeinlass 56 der Expositionsplatte 8 dient zur Verbindung mit einer Druckquelle. Über den Druckeinlass 56 der Expositionsplatte 8 angelegter/zugeführter Druck gelangt in die Druck-Verteilungskammer 48, von wo er dann im Wesentlichen gleichmäßig verteilt den zweiten Druckkanal-Öffnungen 54, von dort den Druckkanälen 44 zugeführt und über die ersten Druckkanal-Öffnungen 52 abgegeben werden kann.

Die Druck-Verteilungskammer 48 kann im Material der Expositionsplatte 8 ausgebildet sein. Wie gezeigt, kann die Druck-Verteilungskammer 48 mittels einer an der Unterseite 50 der Expositionsplatte 8 angeordneten Druckverteilungskammer-Platte 58 bereitgestellt werden, die an ihrer Oberseite 60 wenigstens eine Ausnehmung aufweist. Die Wände der Ausnehmung und der die Ausnehmung abdeckende Bereich der Unterseite 50 der Expositionsplatte 8 definieren dann die Druck-Verteilungskammer 48. Die eine Ausnehmung kann eine Vertiefung sein; es können aber auch mehrere nutähnlich ausgebildete Ausnehmung verwendet werden.

In den Expositionskammern 40 können Mikrowaagen 64 angeordnet werden. Für solche Fälle können die Expositionskammern 40 Leitungsöffnungen 66 aufweisen, die jeweils über in der Expositionsplatte 8 ausgebildeten Leitungskanäle mit einer der Expositionskammern 40 verbunden sind, um eine Leitung 68 einer Mikrowaage 64, über die Energie und/oder Daten übertragen werden können, unterzubringen.

An ihrer Oberseite 48 kann die Expositionsplatte 8 eine Positionsmarke 70 aufweisen, die, wie schon ausgeführt, in Verbindung mit der Ausformung 36 der Grundplatte 26 der Sedimentationsvorrichtung 6 bei der Positionierung der Sedimentationsvorrichtung 6 und der Expositionsplatte 8 relativ zueinander helfen kann.

An ihrer Unterseite 72 kann die Expositionsplatte 8 Positionierelemente, beispielsweise Stifte 74 aufweisen, die eine definierte Positionierung der Expositionsplatte 8 auf dem Schlitten 86 unterstützen.

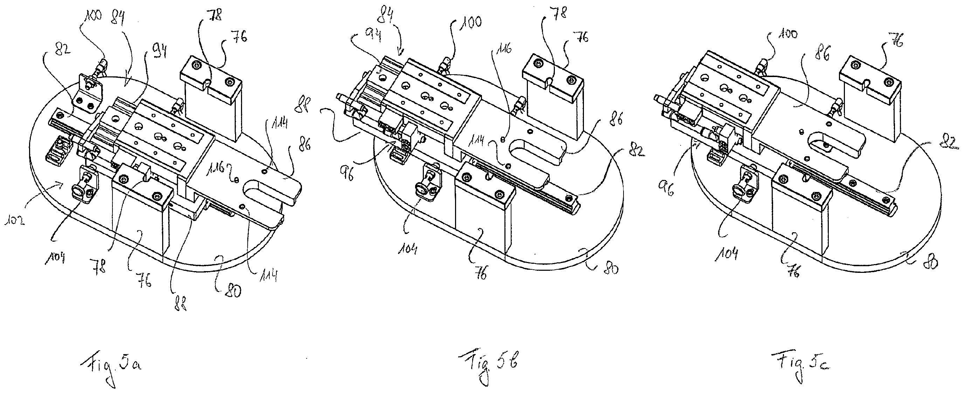

Die Basisvorrichtung 10 (siehe insbesondere Fig. 5) weist Träger 76 auf, an der die Sedimentationsvorrichtung 6 angebracht werden kann. Grundsätzlich ist vorgesehen, die Sedimentationsvorrichtung 6 vorzugsweise lösbar (z.B. mittels Schrauben, Rast-/Schnappverbindungen, Nut/Loch-Stift-Verbindungen etc.), mit der Basisvorrichtung 10 verbunden. Darstellungsgemäß kann dies auch mittels der Stifte 34 der Sedimentationsvorrichtung 6 und in den Trägern 76 ausgeformten Schlitzen oder Nuten 78 erfolgen, in die die Stifte 34 der Sedimentationsvorrichtung 6 eingreifen können. Im zusammengebauten Zustand (siehe z.B. Fig. 1) liegt die Sedimentationsvorrichtung 6 auf der Oberseite der Expositionsvorrichtung auf und wird von dieser abgestützt. Die in die Schlitze/Nuten 78 der Träger 76 eingreifenden Stifte 34 der Sedimentationsvorrichtung 6 sichern diese und gewährleisten deren Positionierung relativ zu der Expositionsplatte 8 und der Basisvorrichtung 10.

Auf einer Grundplatte 80 der Basisvorrichtung 10 ist eine Führungsschiene 82 angeordnet, entlang der eine Führungsvorrichtung 84 bewegt werden kann. Die Führungsvorrichtung 84 umfasst einen Schlitten 86 und eine Schlitten-Positioniervorrichtung 90.

Die an einer Basis 88 der Führungsvorrichtung 84 angeordnete Schlitten-Positioniervorrichtung 90 weist eine Basis 98 mit einer in Wirkverbindung mit der Führungsschiene 82 stehenden Führung 92 (z.B. in Nutform). Die Schlitten-Positioniervorrichtung 90 und damit die Führungsvorrichtung 84 können entlang der Führungsschiene 82 relativ zu der Grundplatte 80 der Basisvorrichtung 10 bewegt und positioniert werden, und zwar in eine darstellungsgemäße rechte, erste Endposition bezüglich der Grundplatte 80 der Basisvorrichtung 10 und eine darstellungsgemäße linke, zweite Endposition bezüglich der Grundplatte 80 der Basisvorrichtung 10.

Dies kann manuell von einem Benutzer vorgenommen werden und/oder gesteuert erfolgen.

Die Positionen der Schlitten-Positioniervorrichtung 90 und insbesondere deren zweite Endposition können mittels einer Schlitten-Positionsdetektionsvorrichtung 100 detektiert werden.

Ferner ist eine Arretierung 102 vorgesehen, die, wenn sie nicht arretiert/wirkt, Bewegungen der Führungsvorrichtung 84 relativ zur Grundplatte zulässt, und, wenn sie arretiert/wirkt, die Führungsvorrichtung 84 und die Grundplatte relativ nicht zueinander bewegbar koppelt.

Darstellungsgemäß umfasst die Arretierung 102 einen Rastbolzen 104 und eine Rastbolzenaufnahme 106 in einer Seite der Basis 98 der Schlitten-Positioniervorrichtung 90. Der Rastbolzen 104 ist vorzugsweise elastisch in Richtung auf die Basis 98 der Schlitten-Positioniervorrichtung 90 vorgespannt und kann mittels dieser Vorspannung in die Rastbolzenaufnahme 106 hinein gedrückt und somit dort positioniert gehalten werden. Zum Entfernen des Rastbolzens 104 kann dieser gegen die Vorspannung bewegt und aus der Rastbolzenaufnahme 106 entfernt werden.

An der Basis 98 der Schlitten-Positioniervorrichtung 90 ist eine Schlittenführungsschiene 94 angeordnet, entlang der der Schlitten 86 bewegt werden kann.

Die Schlitten-Positioniervorrichtung 90 weist ferner eine Schlitten-Bewegungsvorrichtung 96 auf, mittels der der Schlitten 86 entlang der Schlittenführungsschiene 94 bewegt und positioniert werden kann. Insbesondere ist die Schlitten-Bewegungsvorrichtung 96 ausgelegt, den Schlitten 86 in eine erste, eine bezüglich des darstellungsgemäß linken Endes der Führungsvorrichtung 84 weiter entfernte Schlittenposition sowie in eine zweite, bezüglich des darstellungsgemäß linken Endes der Führungsvorrichtung 84 weniger weit entfernte Schlittenposition zu bringen.

Die Position des Schlittens 86, im Fall der ersten Schlittenposition bezüglich der Schlitten-Bewegungsvorrichtung 96 und der ersten Endposition bezüglich der Grundplatte 80 der Basisvorrichtung 10 befindet, wird im Folgenden auch als Proben-Beladeposition bezeichnet.

Die Position des Schlittens 86, im Fall der ersten Schlittenposition bezüglich der Schlitten-Bewegungsvorrichtung 96 und der zweiten Endposition bezüglich der Grundplatte 80 der Basisvorrichtung 10 befindet, wird im Folgenden auch als Aerosol-Beschickungsposition bezeichnet.

Die Position des Schlittens 86, im Fall der zweiten Schlittenposition bezüglich der Schlitten-Bewegungsvorrichtung 96 und der zweiten Endposition bezüglich der Grundplatte 80 der Basisvorrichtung 10 befindet, wird im Folgenden auch als Aerosol-Expositionsposition bezeichnet.

Darstellungsgemäß umfasst die Schlitten-Bewegungsvorrichtung 96 einen Zylinder, Stange oder ähnliches (im Folgenden zusammenfassend als Positionierzylinder 108 bezeichnet), der mit der Basis 98 einerseits und dem Schlitten 86 andererseits verbunden ist. Der Positionierzylinder 108 ist gesteuert bewegbar und positionierbar, um den Schlitten 86 zu bewegen bzw. positionieren.

Der Positionierzylinder 108 kann beispielsweise pneumatisch oder hydraulisch betätigbar sein. Weitere Möglichkeiten umfassen die Verwendung eines elektrischen Antriebs (z.B. Schrittmotor oder Spindelantrieb).

Für die dargestellten Ausführungsformen ist ein pneumatisch betätigbarer Positionierzylinder 108 vorgesehen, wofür ein erster Druckanschluss 110 vorgesehen ist.

Über einen zweiten Druckanschluss 112 kann Druck von der schon weiter oben genannten Druckquelle zugeführt/angelegt werden, der in den Druckkanäle 44 der Expositionsplatte 8 vorherrschen soll bzw. dort erzeugt werden soll.

Der Schlitten 86 hat an seiner darstellungsgemäßen Oberseite eine Form, die vorzugsweise komplementär zur Unterseite 50 der Expositionsplatte 8 ausgebildet ist, um diese im Wesentlichen formschlüssig auf dem Schlitten 86 anordnen zu können.

Der Schlitten 86 weist Aufnahmen 116, beispielsweise Bohrungen, auf, in die die Positionierelemente 74 der Expositionsplatte 8 eingreifen können.

Der Schlitten 86 hat einen mit dem zweiten Druckanschluss 112 in Fluidverbindung stehenden Druckauslass. Der Druckauslass 116 steht bei entsprechender Positionierung der Expositionsplatte 8 mit dem Druckeinlass 56 der Expositionsplatte 8 in Fluidverbindung.

Des Weiteren sind an der Basisvorrichtung 10 Dämpfer, Anschläge etc. 118 vorgesehen, um beispielsweise bei Bewegungen von Komponenten der Basisvorrichtung 10 für Dämpfung aneinander angreifender Komponenten zu sorgen und/oder deren Bewegung zu begrenzen.

Bezugnehmend auf Fig. 5 bis 9 werden nun die Verwendung der Aerosolexpositionsvorrichtung 2 und mögliche Betriebsmodi erläutert.

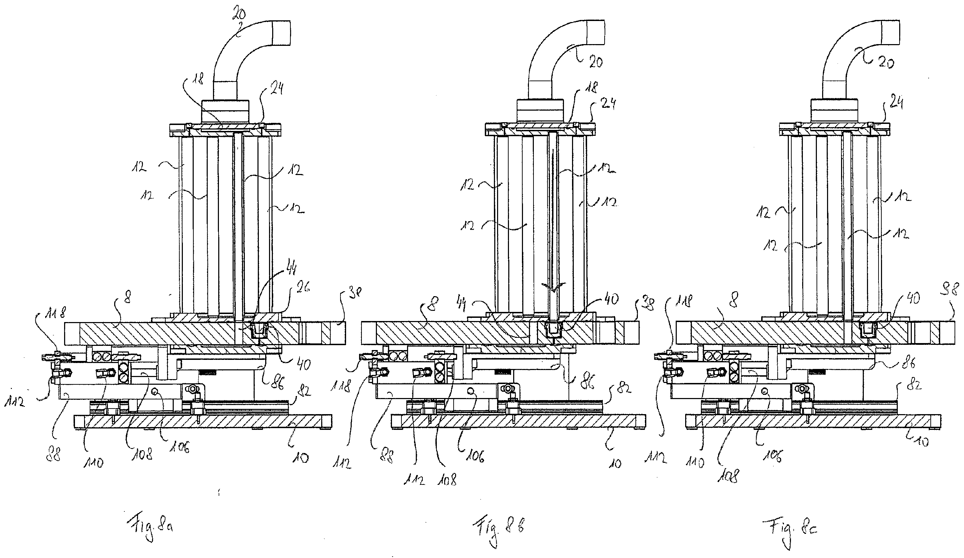

Fig. 5 veranschaulicht Betriebszustände der Aerosolexpositionsvorrichtung 2 ohne Sedimentationsvorrichtung 6, während diese und weitere Betriebszustände der Aerosolexpositionsvorrichtung 2 in zusammengebauten Zustand in Fig. 8 bis 9 zu sehen sind.

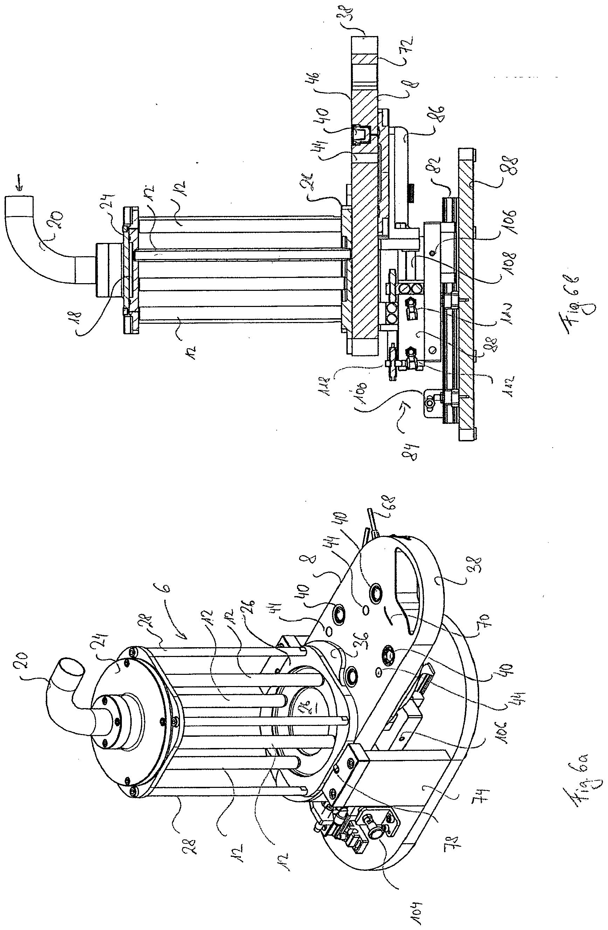

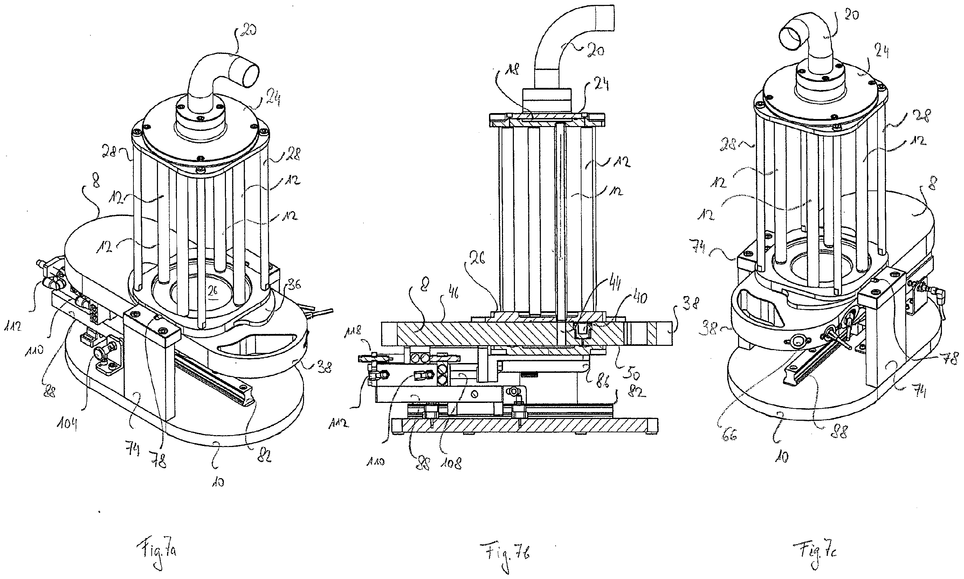

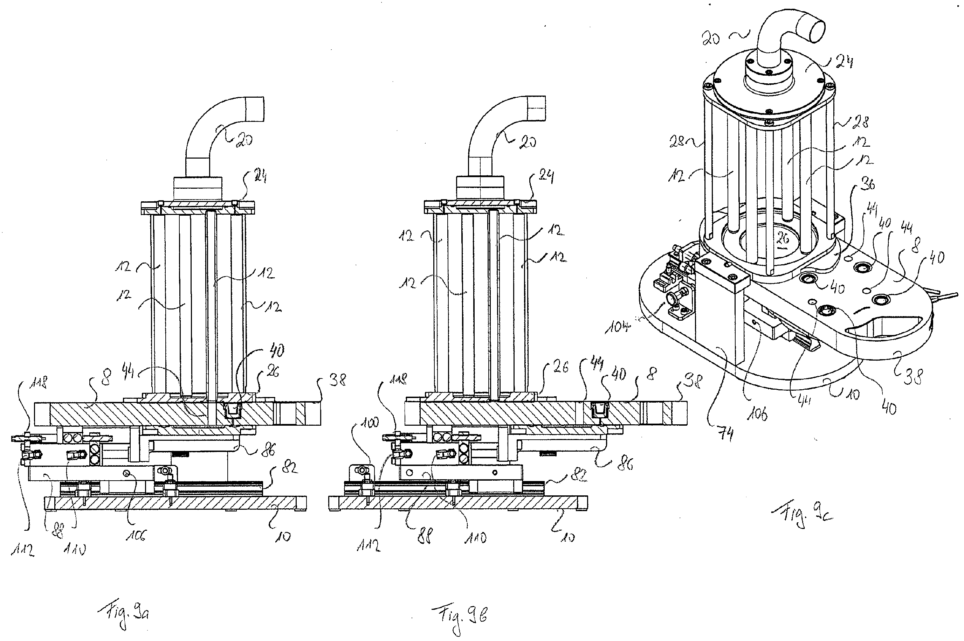

Fig. 5a und Fig. 6 veranschaulichen einen Betriebszustand, in dem sich der Schlitten 86 in einer Proben-Beladeposition befindet. Fig. 5b und Fig. 7 veranschaulichen einen Betriebszustand, in dem sich der Schlitten 86 in einer Aerosol-Beschickungsposition befindet. Fig. 5c und Fig. 8 veranschaulichen einen Betriebszustand, in dem sich der Schlitten 86 in einer Aerosol-Expositionsposition befindet. Fig. 9 veranschaulicht einen Betriebszustand, in dem sich der Schlitten 86 in einer Proben-Entnahmeposition befindet, die hinsichtlich der Positionen des Führungsvorrichtung 84 und der Expositionsplatte 8 mit der Proben-Beladeposition vergleichbar ist.

In der Proben-Beladeposition (Fig. 5a, Fig. 6) ist die Führungsvorrichtung 84 bezüglich der Grundplatte 80 der Basisvorrichtung 10 bewegbar, da die Arretierung 102 nicht arretiert. Bei den gezeigten Ausführungsformen wirken dabei der Rastbolzen 104 und die Rastbolzenaufnahme 106 nicht zusammen. Vielmehr kontaktiert der Rastbolzen 104 die Seite der Basis 88 der Führungsvorrichtung 84, wo sich auch die Rastbolzenaufnahme 106 befindet. Die auf den Rastbolzen 104 wirkende Vorspannkraft hält diesen in Kontakt mit der Seite der Basis 88 der Führungsvorrichtung 84, ist vorzugsweise aber so gewählt, dass die Führungsvorrichtung 84 frei und einfach entlang der Führungsschiene bewegt werden kann.

Für die Proben-Beladeposition des Schlittens 86 ist die Schlitten-Bewegungsvorrichtung 96 so eingestellt, dass sich der Schlitten 86 in der ersten Schlittenposition bezüglich Schlitten-Positioniervorrichtung 90 befindet. Ferner befindet sich Führungsvorrichtung 84 in der ersten Endposition bezüglich der Grundplatte 80 der Basisvorrichtung 10.

Eine visuelle Kontrolle der Positionierung und Position der Expositionsplatte 8 und der Sedimentationsvorrichtung 6 relativ zu einander kann mittels der Ausformung 36 der Sedimentationsvorrichtung 6 und der Positionsmarke 70 der Expositionsplatte 8 erfolgen.

In der Proben-Beladeposition des Schlittens 86 sind die Expositionskammern, deren Expositionskammeröffnungen 42 frei liegen, zugänglich und können mit Proben bestückt werden.

Nach dem Bestücken mit Proben wird der Schlitten 86 darstellungsgemäß nach links bewegt. Dabei wird der Zustand der Schlitten-Bewegungsvorrichtung 96 nicht geändert, weshalb der Schlitten 86 in der ersten Schlittenposition bezüglich Schlitten-Positioniervorrichtung 90 bleibt. Folglich für eine solche Bewegung des Schlittens 86 zu einer gleichgerichteten Bewegung der Führungsvorrichtung 84 relativ zu der Grundplatte 80 der Basisvorrichtung 10, d.h. darstellungsgemäß auch nach links. Diese Bewegung wird beendet, wenn die Arretierung 102 wirksam wird und eine Bewegung der Führungsvorrichtung 84 und der Grundplatte 80 der Basisvorrichtung 10 relativ zueinander verhindert. Nach den gezeigten Ausführungsformen ist dies der Fall, wenn der Rastbolzen 104 in die Rastbolzenaufnahme 106 eingreift.

Eine solche Bewegung des Schlittens 86 und damit der Führungsvorrichtung 84 kann automatisch gesteuert (z.B. mittel motorischem, pneumatischen und/oder hydraulischen Antrieb gesteuert von der Steuerung 4) erfolgen, oder indem ein Benutzer die Expositionsplatte 8 (z.B. an ihrem Griff 38) nimmt und (darstellungsgemäß nach links) bewegt.

In diesem Zustand befindet sich der Schlitten 86 in der Aerosol-Beschickungsposition (Fig. 7), welche mittels der Schlitten-Positionsdetektionsvorrichtung 100 detektiert werden kann. In dieser liegen die ersten Druckkanal-Öffnungen 52 der Expositionsplatte 8 und die Sedimentationskanal-Aerosolauslässe 16 wenigstens einander gegenüber. Vorzugsweise stehen die ersten Druckkanal-Öffnungen 52 der Expositionsplatte 8 und die Sedimentationskanal-Aerosolauslässe 16 in abgedichteter Fluidverbindung, beispielsweise unterstützt durch die Dichtungen 32. Jedenfalls stehen die ersten Druckkanal-Öffnungen 52 der Expositionsplatte 8 und die Sedimentationskanal-Aerosolauslässe 16 in einem solchen Verhältnis, dass in den Druckkanälen 44 herrschender Druck auf die Sedimentationskanäle 12 wirken kann. Um Aerosol in die Sedimentationskanäle 12 einzubringen, ist es vorgesehen, Unterdruck in den Druckkanälen 44 zu erzeugen, der dann auch in den Sedimentationskanälen 12 wirkt und Aerosol einbringt bzw. ansaugt. Der Unterdruck in den Druckkanälen 44 wird über eine von Steuerung 4 gesteuerte Druckquelle zugeführt, welche über den zweiten Druckanschluss 112 mit den Drucckanälen 44 verbunden ist.

Ferner ist es möglich, vor dem Ansaugen von Aerosol Überdruck in den Druckkanälen 44 zu erzeugen, der dann auch in den Sedimentationskanälen 12 wirkt und dazu verwendet werden kann die Sedimentationskanäle 12 von unerwünschten Bestandteilen zu befreien ("freizublasen"). Dafür kann es bevorzugt sein, die Aerosolquelle erst danach bzw. dann anzuschließen, wenn mittels Unterdruck Aerosol zugeführt werden soll.

Die Dauer des Unterdrucks und/oder dessen Stärke werden von der Steuerung 4 gesteuert, vorzugsweise derart, dass eine vorbestimmte Menge Aerosol in die Sedimentationskanäle 12 eingebracht wird.

Nach der Phase, Aerosol in die Sedimentationskanäle 12 einzubringen, wird der Schlitten 86 - ausgehend von der in Fig. 8a gezeigten Aerosol-Beschickungsposition - in die Aerosol-Expositionsposition gebracht (Fig. 8b), welche mittels der Schlitten-Positionsdetektionsvorrichtung 100 detektiert werden kann. Die erfolgt mittels der von der Steuerung 4 gesteuerten Schlitten-Positioniervorrichtung 90, welchen den Schlitten 86 in die zweite Schlittenposition bezüglich Schlitten-Positioniervorrichtung 90 bringt.

In der zweiten Schlittenposition bezüglich Schlitten-Positioniervorrichtung 90 liegen Expositionskammeröffnungen 42 und die Sedimentationskanal-Aerosolauslässe 16 wenigstens einander gegenüber. Vorzugsweise stehen die Expositionskammeröffnungen 42 und die Sedimentationskanal-Aerosolauslässe 16 in abgedichteter Fluidverbindung, beispielsweise unterstützt durch die Dichtungen 32. Jedenfalls stehen die Expositionskammeröffnungen 42 und die Sedimentationskanal-Aerosolauslässe 16 in einem solchen Verhältnis, dass die in den Expositionskammern 40 vorhandenen Proben gegenüber dem in den Sedimentationskanälen 12 vorhandenen Aerosol exponiert werden und dieses auf die Proben wirken kann. Abhängig vom Aerosol (z.B. dessen Dichte) kann diese dabei in den Sedimentationskanälen 12 nach unten auf die Proben absinken.

Die Dauer der Aerosolexposition wird von der Steuerung 4 gesteuert. Danach wird der Schlitten 86 mittels der von der Steuerung 4 gesteuerten Schlitten-Positioniervorrichtung 90, welchen den Schlitten 86 in die erste Schlittenposition bezüglich Schlitten-Positioniervorrichtung 90 zurückbringt (Fig. 8c). Dies führt dazu, dass Aerosol in den Sedimentationskanälen 12 nicht mehr auf die Proben wirken kann. Dabei kann - wie in der Aerosol-Beschickungsposition - Druck an die Sedimentationskanäle 12 angelegt werden, d.h. gegebenenfalls auch Überdruck.

Um die Proben aus den Expositionskammern 40 zu entfernen, wird - ausgehend von der in Fig. 9a gezeigten Aerosol-Beschickungsposition - die Führungsvorrichtung 84 in der erste Endposition bezüglich der Grundplatte 80 der Basisvorrichtung 10 gebracht (Fig. 9). Dafür wird die Arretierung 102 gelöst, was auch gesteuert von der Steuerung 4 erfolgen kann. Bei den gezeigten Ausführungsformen wird hierfür der Rastbolzen 104 aus der Rastbolzenaufnahme 106 entfernt. Ohne Wirkung der Arretierung 102 kann die Führungsvorrichtung 84 in der erste Endposition bezüglich der Grundplatte 80 der Basisvorrichtung 10 gebracht werden. Wie bei einer Bewegung der Führungsvorrichtung 84 von der ersten in die zweite Endposition bezüglich der Grundplatte 80 der Basisvorrichtung 10 kann dessen Bewegung in die Gegenrichtung automatisch gesteuert (z.B. mittel motorischem, pneumatischen und/oder hydraulischen Antrieb gesteuert von der Steuerung 4) erfolgen, oder indem ein Benutzer die Expositionsplatte 8 (z.B. an ihrem Griff 38) nimmt und (darstellungsgemäß nach rechts) bewegt.

Dann befinden sich der Schlitten 86 in der ersten Schlittenposition bezüglich Schlitten-Positioniervorrichtung 90 und die Führungsvorrichtung 84 in der ersten Endposition bezüglich der Grundplatte 80 der Basisvorrichtung 10. Diese Probenentnahmeposition des Schlittens 86 entspricht der Proben-Beladeposition, jedenfalls dahingehend, dass die Expositionskammeröffnungen 42 frei liegen. Dies ermöglicht es, die Proben zu entnehmen.

**BEZUGSZEICHENLISTE**

| | |
|---|---|
| Aerosolexpositionsvorrichtung | 2 |
| Steuerung | 4 |
| Sedimentationsvorrichtung | 6 |
| Expositionsplatte | 8 |
| Basisvorrichtung | 10 |
| Sedimentationskanal | 12 |
| Sedimentationskanal-Aerosoleinlass | 14 |
| Sedimentationskanal- Aerosolauslass | 16 |
| Aerosol- Verteilungskammer | 18 |
| Aerosol-Einlass | 20 |
| Pfeile - Aerosolzufuhrrichtungen | 22 |
| Deckplatte | 24 |
| Grundplatte | 26 |
| Stütze | 28 |
| Unterseite der Grundplatte | 30 |
| Dichtung an/für Sedimentationskanal-Aerosolauslass | 32 |
| Stift an Grundplatte | 34 |
| Ausformung an Grundplatte | 36 |
| Griff der Expositionsplatte | 38 |
| Expositionskammer | 40 |
| Expositionskammeröffnung | 42 |
| Druckkanal in Expositionsplatte | 44 |
| Oberseite der Expositionsplatte | 46 |
| Druck-Verteilungskammer | 48 |
| Unterseite der Expositionsplatte | 50 |
| Erste Druckkanal-Öffnung | 52 |
| Zweite Druckkanal-Öffnung | 54 |
| Druckeinlass der Expositionsplatte | 56 |
| Druckverteilungskammer- Platte | 58 |
| Oberseite der Druckverteilungskammer-Platte | 60 |
| Ausnehmung der Druckverteilungskammer-Platte | 62 |
| Mikrowaage | 64 |
| Leitungsöffnung | 66 |
| Leitung Mikrowaage | 68 |
| Positionsmarke | 70 |
| Unterseite der Expositionsplatte | 72 |
| Positionierelement | 74 |
| Träger der Basisvorrichtung | 76 |
| Schlitz/Nut in Träger der Basisvorrichtung | 78 |
| Grundplatte der Basisvorrichtung | 80 |
| Führungsschiene der Basisvorrichtung | 82 |
| Führungsvorrichtung | 84 |
| Schlitten | 86 |
| Basis der Führungsvorrichtung | 88 |
| Schlitten-Positioniervorrichtung | 90 |
| Führung der Schlitten-Positioniervorrichtung | 92 |
| Schlittenführungsschiene | 94 |
| Schlitten- Bewegungsvorrichtung | 96 |
| Basis der Schlitten-Positioniervorrichtung | 98 |
| Schlitten-Positionsdetektionsvorrichtung | 100 |
| Arretierung | 102 |
| Rastbolzen | 104 |
| Rastbolzenaufnahme | 106 |
| Positionierzylinder | 108 |
| erster Druckanschluss (für Positionierzylinder) | 110 |
| Zweiter Druckanschluss (Druck für Expositionsplatte) | 112 |
| Aufnahme (Schlitten) | 114 |
| Druckauslass (Schlitten) | 116 |
| Dämpfer, Anschläge etc | 118 |

## Patentansprüche

1. Aerosolexpositionsvorrichtung, um wenigstens eine Probe mit einem Aerosol zu beaufschlagen, umfassend:
- eine Basisvorrichtung (10), die eine Führungsvorrichtung (84) mit einem bewegbaren Schlitten (86) umfasst,
- eine Sedimentationsvorrichtung (6), die an der Basisvorrichtung (10) angebracht ist und wenigstens einen Sedimentationskanal (12) jeweils mit einem Sedimentationskanal-Aerosoleinlass (14) und einem Sedimentationskanal-Aerosolauslass (16) umfasst,
- eine Expositionsplatte (8), die eine Expositionskammer (40) mit einer Expositionskammer-Öffnung (42) und einen Druckkanal (44) mit einer ersten Druckkanal-Öffnung (52) umfasst,
wobei
- die Expositionsplatte (8) an dem bewegbaren Schlitten (86) angebracht ist und mit diesem bewegbar ist, wobei der Schlitten (86) aufweist
-- eine Proben-Beladeposition, in der die Expositionskammer-Öffnung (42) zugänglich ist, um eine Probe in die Expositionskammer (40) einbringen zu können,
-- eine Aerosol-Beschickungsposition, in der die erste Druckkanal-Öffnung und ein entsprechender des wenigstens einen Sedimentationskanal-Aerosolauslasses (16) in Fluidverbindung stehen, um in dem Druckkanal (44) vorherrschenden Druck an den jeweiligen des wenigstens einen Sedimentationskanals (12) anzulegen,
-- eine Aerosol-Expositionsposition, in der die Expositionskammer-Öffnung (42) und der entsprechende des wenigstens einen Sedimentationskanal-Aerosolauslasses (16) in Fluidverbindung stehen, um in dem jeweiligen des wenigstens einen Sedimentationskanals (12) vorhandenes Aerosol in die Expositionskammer (40) einzubringen.

2. Aerosolexpositionsvorrichtung nach dem einem der vorherigen Patentansprüche, wobei die Sedimentationsvorrichtung (6) aufweist:
- eine Aerosol-Verteilungskammer (18), die in Fluidverbindung mit einem Aerosol-Einlass (20) der Sedimentationsvorrichtung (6) zum Anschluss an eine Aerosolquelle und dem wenigstens einen Sedimentationskanal-Aerosoleinlass (14) steht und zwischen diesen angeordnet ist.

3. Aerosolexpositionsvorrichtung nach dem einem der vorherigen Patentansprüche, wobei in der wenigstens einen Expositionskammer (40) der Expositionsplatte (8) jeweils eine Waage (64) angeordnet ist.

4. Aerosolexpositionsvorrichtung nach einem der vorherigen Patentansprüche, wobei die Basisvorrichtung (10) eine Schlitten-Positioniervorrichtung (90) aufweist, die aufweist
- eine erste Position in der Proben-Beladeposition des Schlittens (86) der Führungsvorrichtung (84),
- eine zweite Position in der Aerosol-Beschickungsposition des Schlittens (86) der Führungsvorrichtung (84),
- eine dritte Position in der Aerosol-Expositionsposition des Schlittens (86) der Führungsvorrichtung (84) .

5. Aerosolexpositionsvorrichtung nach Patentanspruch 4, wobei die Schlitten-Positioniervorrichtung (90) in ihrer zweiten Position und in ihrer dritten Position mit dem Schlitten (86) der Führungsvorrichtung (84) gekoppelt ist.

6. Aerosolexpositionsvorrichtung nach Patentanspruch 4 oder 5, wobei die Basisvorrichtung (10) eine Arretierung aufweist, die den Schlitten (86) der Führungsvorrichtung (84) und die Schlitten-Positioniervorrichtung (90) miteinander koppelt, wenn der Schlitten (86) der Führungsvorrichtung (84) von der Proben-Beladeposition in die Aerosol-Beschickungsposition übergeht, und den Schlitten (86) der Führungsvorrichtung (84) und die Schlitten-Positioniervorrichtung (90) entkoppelt, wenn der Schlitten (86) der Führungsvorrichtung (84) von der Aerosol-Beschickungsposition in die Proben-Beladeposition übergeht.

7. Aerosolexpositionsvorrichtung nach einem der vorherigen Patentansprüche, ferner mit einer Schlitten-Bewegungsvorrichtung, welche ausgelegt ist, den Schlitten (86) in eine erste Schlittenposition und in eine zweite Schlittenposition zu bringen.

8. Aerosolexpositionsvorrichtung nach dem einem der vorherigen Patentansprüche, ferner mit einer Druckquelle, die mit einem Druckeinlass der Basisvorrichtung (10) zum Anschluss an eine Druckquelle in Fluidverbindung steht und Unterdruck und/oder Überdruck zu erzeugen vermag.

9. Aerosolexpositionsverfahren, um wenigstens eine Probe mit einem Aerosol zu beaufschlagen, wobei das Verfahren umfasst:
- Positionieren eines Schlittens (86) einer Aerosolexpositionsvorrichtung (2) in einer Proben-Beladeposition und Einbringen jeweils einer Probe in eine Expositionskammer (40) des Schlittens (86),
- Positionieren des Schlittens (86) in einer Aerosol-Beschickungsposition und Anlegen eines in wenigstens einem Druckkanal (44) des Schlittens (86) vorherrschenden Druckes an einen dem Druckkanal (44) zugeordneten Sedimentationskanal (12), um in diesen Aerosol einzubringen,
- Positionieren des Schlittens (86) in einer Aerosol-Expositionsposition, um in dem wenigstens einen Sedimentationskanal (12) vorhandenes Aerosol in die Expositionskammer (40) einzubringen.

10. Aerosolexpositionsverfahren nach Patentanspruch 9,
wobei der Schritt, den Schlitten (86) in der Proben-Beladeposition zu positionieren, manuell durchgeführt wird,
und/oder
ferner mit einem Schritt, den Schlitten (86) wieder in die Proben-Beladeposition zu bringen, der vorzugsweise von einem Benutzer manuell durchgeführt wird.

11. Aerosolexpositionsverfahren nach einem der Patentansprüche 9 bis 10, wobei der Schritt, den Schlitten (86) in der Aerosol-Beschickungsposition zu positionieren, und/oder der Schritt, den Schlitten (86) in der Aerosol-Expositionsposition zu positionieren, gesteuert und/oder automatisiert durchgeführt wird.

## Claims

1. Aerosol exposure device for exposing at least one specimen with aerosol, the device comprising:
- a base device (10) comprising a guiding device (84) including a moveable sliding device (86);
- a sedimentation device (6) being attached to the base device (10) and comprising at least one sedimentation channel (12) respectively including a sedimentation channel aerosol inlet (14) and a sedimentation channel aerosol outlet (16);
- an exposure plate (8) comprising an exposure chamber (40) having an exposure chamber opening (42) and a pressure channel (44) having a first pressure chamber opening (52);
wherein
- the exposure plate (8) is attached to and moveable with the moveable sliding device (86), wherein the sliding device (86) comprises
-- a specimen loading position, in which the exposure chamber opening (42) is accessible for loading a specimen into the exposure chamber (40),
-- an aerosol feeding position, in which the first pressure channel opening and a respective one of the at least one sedimentation channel aerosol outlet (16) are in fluid connection in order to apply pressure being present in the pressure channel (44) to the respective one of the at least one sedimentation channel (12),
-- an aerosol exposure position, in which the exposure chamber opening (42) and the respective one of the at least one sedimentation channel aerosol outlet (16) are in fluid connection in order to feed aerosol being present in the respective at least one sedimentation channel (12) into the exposure chamber (40).

2. Aerosol exposure device according to one of the preceding claims, wherein the sedimentation device (6) comprises:
- an aerosol distribution chamber (18) being in fluid connection with an aerosol inlet (20) of the sedimentation device (6), which aerosol inlet (20) being provided for connection with an aerosol source, and being in fluid connection with the at least one sedimentation channel aerosol inlet (14) and being arranged therebetween.

3. Aerosol exposure device according to one of the preceding claims, wherein a weighing scale (64) is respectively arranged in the at least one exposure chamber (40) of the exposure plate (8).

4. Aerosol exposure device according to one of the preceding claims, wherein the base device (10) comprises a positioning device (90) for the sliding device, the positioning device (90) comprising
- a first position in the specimen loading position of the sliding device (86) of the guiding device (84),
- second position in the aerosol feeding position of the sliding device (86) of the guiding device (84),
- a third position in the aerosol exposure position of the sliding device (86) of the guiding device (84).

5. Aerosol exposure device according to claim 4, wherein the positioning device (90) for the sliding device is coupled with the sliding device (86) of the guiding device (84) in the second position and the third position of the positioning device.

6. Aerosol exposure device according to claim 4 or 5, wherein the base device (10) comprises a locking device, which couples the sliding device (86) of the guiding device (84) and the positioning device (90) for the sliding device with each other, if the sliding device (86) of the guiding device (84) changes from the specimen loading position to the aerosol feeding position, and decouples the sliding device (86) of the guiding device (84) and the positioning device (90) for the sliding device with each other, if the sliding device (86) of the guiding device (84) changes from the aerosol feeding position to the specimen loading position.

7. Aerosol exposure device according to one of the preceding claims, further comprising a motion device for the sliding device, the motion device being adapted to bring the sliding device (86) in a first sliding device's position and a second sliding device's position.

8. Aerosol exposure device according to one of the preceding claims, further comprising a pressure source being in fluid connection with a pressure inlet of the based device (10), which pressure inlet being provided for connection to a pressure source, and being adapted to generate high pressure and/or low pressure.

9. Aerosol exposure method for exposing at least one specimen with aerosol, the method comprising:
- positioning a sliding device (86) of an aerosol exposure device (2) in a specimen loading position and respectively loading a specimen in an exposure chamber (40) of the sliding device (86),
- positioning the sliding device (86) in an aerosol feeding position and applying pressure being present in at least one pressure channel (44) of the sliding device (86) to a sedimentation channel (12) being associated to the pressure channel (44) in order to feed aerosol into the same,
- positioning the sliding device (86) in an aerosol exposure position in order to feed aerosol being present in the at least one sedimentation channel (12) into the exposure chamber (40).

10. Aerosol exposure method according to claim 9,
wherein the step of positioning the sliding device (86) in the specimen loading position is carried out manually, and/or
further comprising a step of returning the sliding device (86) in the specimen loading position, which step being preferably carried out manually.

11. Aerosol exposure method according to one of the claims 9 to 10, wherein the step of positioning the sliding device (86) in the aerosol feeding position and/or the step of positioning the sliding device (86) in the aerosol exposure position is carried out controlled and/or automatically.

## Revendications

1. Dispositif d'exposition à un aérosol pour exposer au moins un échantillon à un aérosol comprenant :
- un dispositif de base (10) comprenant un dispositif de guidage (84) avec un chariot mobile (86),
- un dispositif de sédimentation (6) monté sur le dispositif de base (10) et comprenant au moins un canal de sédimentation (12) avec respectivement une entrée (14) d'aérosol de canal de sédimentation et une sortie (16) d'aérosol de canal de sédimentation,
- une plaque d'exposition (8) comprenant une chambre d'exposition (40) avec une ouverture (42) de chambre d'exposition et un canal de pression (44) avec une première ouverture (52) de canal de pression,
dans lequel
- la plaque d'exposition (8) est montée sur le chariot mobile (86) et est mobile avec celui-ci, le chariot (86) comprenant
-- une position de chargement d'échantillon, dans laquelle l'ouverture (42) de chambre d'exposition est accessible pour permettre l'introduction d'un échantillon dans la chambre d'exposition (40),
-- une position d'alimentation en aérosol dans laquelle la première ouverture de canal de pression et ladite au moins une sortie (16) d'aérosol de canal de sédimentation correspondante sont en communication fluidique pour appliquer la pression régnant dans le canal de pression (44) audit au moins un canal de sédimentation (12) respectif,
-- une position d'exposition à un aérosol dans laquelle l'ouverture (42) de chambre d'exposition et ladite au moins une sortie (16) d'aérosol de canal de sédimentation correspondante sont en communication fluidique pour introduire un aérosol présent dans ledit au moins un canal de sédimentation (12) respectif dans la chambre d'exposition (40).

2. Dispositif d'exposition à un aérosol selon l'une des revendications précédentes, dans lequel le dispositif de sédimentation (6) comprend :
- une chambre de distribution d'aérosol (18) qui est en communication fluidique avec une entrée d'aérosol (20) du dispositif de sédimentation (6) pour le raccordement à une source d'aérosol et avec ladite au moins une entrée (14) d'aérosol de canal de sédimentation et qui est disposée entre celles-ci.

3. Dispositif d'exposition à un aérosol selon l'une des revendications précédentes, dans lequel une balance (64) est disposée dans chacune desdites au moins une chambre d'exposition (40) de la plaque d'exposition (8).

4. Dispositif d'exposition à un aérosol selon l'une des revendications précédentes, dans lequel le dispositif de base (10) comprend un dispositif de positionnement (90) de chariot comprenant
- une première position dans la position de chargement d'échantillon du chariot (86) du dispositif de guidage (84),
- une deuxième position dans la position d'alimentation en aérosol du chariot (86) du dispositif de guidage (84),
- une troisième position dans la position d'exposition à un aérosol du chariot (86) du dispositif de guidage (84).

5. Dispositif d'exposition à un aérosol selon la revendication 4, dans lequel le dispositif de positionnement (90) de chariot est couplé dans sa deuxième position et dans sa troisième position au chariot (86) du dispositif de guidage (84).

6. Dispositif d'exposition à un aérosol selon la revendication 4 ou 5, dans lequel le dispositif de base (10) comprend un moyen de blocage qui couple le chariot (86) du dispositif de guidage (84) et le dispositif de positionnement (90) de chariot l'un à l'autre lorsque le chariot (86) du dispositif de guidage (84) passe de la position de chargement d'échantillon à la position d'alimentation en aérosol, et découple le chariot (86) du dispositif de guidage (84) et le dispositif de positionnement (90) de chariot lorsque le chariot (86) du dispositif de guidage (84) passe de la position d'alimentation en aérosol à la position de chargement d'échantillon.

7. Dispositif d'exposition à un aérosol selon l'une des revendications précédentes, comprenant en outre un dispositif de déplacement de chariot qui est conçu pour amener le chariot (86) dans une première position de chariot et dans une deuxième position de chariot.

8. Dispositif d'exposition à un aérosol selon l'une des revendications précédentes, comprenant en outre une source de pression qui est en communication fluidique avec une entrée de pression du dispositif de base (10) pour le raccordement à une source de pression et qui est capable de générer une dépression et/ou une surpression.

9. Procédé d'exposition à un aérosol pour soumettre au moins un échantillon à un aérosol, le procédé comprenant les étapes consistant à :
- positionner un chariot (86) d'un dispositif d'exposition à un aérosol (2) dans une position de chargement d'échantillon et introduire un échantillon respectif dans une chambre d'exposition (40) du chariot (86),
- positionner le chariot (86) dans une position d'alimentation en aérosol et appliquer une pression régnant dans au moins un canal de pression (44) du chariot (86) à un canal de sédimentation (12) associé au canal de pression (44) pour y introduire un aérosol,
- positionner le chariot (86) dans une position d'exposition à un aérosol pour introduire un aérosol présent dans ledit au moins un canal de sédimentation (12) dans la chambre d'exposition (40).

10. Procédé d'exposition à un aérosol selon la revendication 9,
dans lequel l'étape consistant à positionner le chariot (86) dans la position de chargement d'échantillon est effectuée manuellement
et/ou
comprenant en outre une étape consistant à ramener le chariot (86) dans la position de chargement d'échantillon, qui est effectuée de préférence manuellement par un utilisateur.

11. Procédé d'exposition à un aérosol selon l'une des revendications 9 à 10, dans lequel l'étape consistant à positionner le chariot (86) dans la position d'alimentation en aérosol et/ou l'étape consistant à positionner le chariot (86) dans la position d'exposition à un aérosol est effectuée d'une manière commandée et/ou automatisée.
